# EUROPÄISCHE PATENTSCHRIFT

(11) **EP 0 589 502 B1**
(45) Veröffentlichungstag und Bekanntmachung des Hinweises auf die Patenterteilung: **17.04.1996**
(21) Anmeldenummer: 93202388.0
(22) Anmeldetag: 16.08.1993
(51) Int. Cl.: F23J 3/00

(54) **Vorrichtung zum Abblasen von Staub von horizontal angeordneten Katalysatorflächen**
Dust blowing device for horizontally arranged catalyst surfaces
Appareil de soufflage de la poussière pour les surfaces horizontales d'un catalyseur

(30) Priorität: 19.09.1992 DE 4231453
(43) Veröffentlichungstag der Anmeldung: 30.03.1994
(73) Patentinhaber: METALLGESELLSCHAFT AG, D-60323 Frankfurt am Main (DE)
(72) Erfinder: Mayer, Ralf, D-55262 Heidesheim (DE); Maus, Werner, D-63073 Offenbach (DE)

(56) Entgegenhaltungen:
- DE-A- 491 967
- DE-A- 3 741 524
- GB-A- 458 092
- PATENT ABSTRACTS OF JAPAN vol. 005, no. 144 (C-071)11. September 1981 & JP-A-56 076 239 (MITSUBISHI HEAVY IND.) 23. Juni 1981

## Beschreibung

Die Erfindung bezieht sich auf eine Vorrichtung zum Abblasen von Staub von horizontal angeordneten Katalysatorflächen.

Verfahren und Vorrichtungen zur Abreinigung von Staub von Katalysatorflächen mittels Luft sind bekannt. In der EP 0 372 606 A2 wird ein Verfahren zum Entfernen von Staub von der Anströmfläche eines Katalysators aus keramischem Material für die Reinigung eines Gasstroms beschrieben, bei dem mittels einer in geringem Abstand nacheinander über die gesamte Anströmfläche des Katalysators geführte Einrichtung eine kleine Menge Gas aus dem Abgasstrom abgesaugt wird. Die abgesaugte kleine Gasmenge, die im wesentlichen den gesamten auf der Anströmfläche des Katalysators abgelagerten Staub enthält, wird mittels Gebläse einer Staubreinigung zugeführt.

In der DE-OS 30 44 820 wird ein Verfahren zum Staubabziehen aus einem Festkörper-Gaskontaktreaktor für staubige Abgase beschrieben, der einen Dichtungspackungsabschnitt aus Packungen mit je mehreren in Strömungsrichtung des zu behandelnden Abgases gerichteten Gasdurchgängen besitzt. Bei diesem bekannten Verfahren werden Strahlen aus Reinigungsgas aus einer Reihe von festen oder beweglichen Düsen geblasen, die im Reaktor gegen die Vorderfläche des Einlaß- oder Auslaßendes des Packungsabschnitts gerichtet sind. Der Abstand der Düsen von der Vorderfläche des Packungsabschnitts liegt im Bereich von 0,2 bis 1 m, wobei die Gasströmungsgeschwindigkeit am Einlaß des Packungsabschnitts 5 bis 40 m/s beträgt.

In der JP-PS 54-25266 wird ebenfalls eine Vorrichtung zum Abblasen von Staub von horizontal angeordneten Katalysatorflächen beschrieben. Bei dieser Vorrichtung ist nachteilig, daß die Zuleitung für die Düsen konstruktiv relativ aufwendig gelagert werden, was gleichzeitig mit einem relativ großen Platzbedarf außerhalb des Gehäuses des Reaktors verbunden ist. In Fig. 1 der JP-PS 54-25266 ist dieser aufwendig gestaltete Antrieb, seitlich am Reaktorgehäuse 1 angeordnet, im Schnitt dargestellt (siehe auch Dokument DE-A-3 741 524). Aus Platzgründen wird ein solcher Antrieb zusammen mit den erforderlichen Austauschvorrichtungen für das Austauschen der einzelnen Katalysatorblöcke an einer gemeinsamen Wand des Reaktorgehäuses angeordnet. Dies hat darüber hinaus den Vorteil, daß die Austauschvorrichtungen und der jeweilige Antrieb von einer einzigen Arbeitsbühne aus bedient und gewartet werden können. Bei den in der JP-PS 54-25266 und DE-OS 30 44 820 beschriebenen Abblasevorrichtungen ist eine solche vorteilhafte Anordnung nur dann realisierbar, wenn der jeweilige Antrieb über den jeweiligen Austauschvorrichtungen angeordnet wird, was eine relativ große Bauhöhe des Reaktors zur Folge hat. Die in der JP-PS 54-25266 beschriebene Abblasevorrichtung hat darüber hinaus den Nachteil, daß die in Fig. 1 dargestellte Führungsschiene 10 nach relativ kurzer Betriebszeit mit Verunreinigungen beaufschlagt wird, so daß eine horizontale Bewegung des Gegenlagers 11 nach relativ kurzer Betriebszeit erschwert wird oder überhaupt nicht mehr durchgeführt werden kann.

Aus der JP-PS 58-150418 ist es bekannt, oberhalb der horizontalen Katalysatorflächen angeordnete Düsenrohre für die Druckluftzufuhr in eine Drehbewegung zu versetzen. Dabei ist es jedoch nachteilig, daß die Eckbereiche der Katalysatorflächen nicht in ausreichendem Maße von Staub befreit werden können, was eine Verminderung der katalytischen Wirkung der einzelnen Katalysatorblöcke zur Folge hat.

Der Erfindung liegt die Aufgabe zugrunde, eine Vorrichtung zum Abblasen von Staub von horizontal angeordneten Katalysatorflächen zu schaffen, die eine zuverlässige Abreinigung der Katalysatorflächen ermöglicht und die eine Anordnung von Antrieb und Austauschvorrichtungen für das Austauschen der einzelnen Katalysatorblöcke an einer gemeinsamen Wand des Reaktors ermöglicht, ohne daß dafür eine zusätzliche Bauhöhe des Reaktors erforderlich ist.

Die der Erfindung zugrundeliegende Aufgabe wird durch eine Vorrichtung zum Abblasen von Staub von horizontal angeordneten Katalysatorflächen gelöst, bestehend aus
a) mindestens einem oberhalb der horizontal angeordneten Katalysatorflächen horizontal mittels Pendellager angeordneten Verteilerrohr, das direkt mit jeweils einer Zuleitung für Druckluft verbunden ist;
b) mindestens einem an jedem Verteilerrohr abzweigend vertikal nach unten angeordneten Verbindungsrohr, das eine Länge von 800 bis 2000 mm aufweist und das über mindestens eine horizontal beweglich gelagerte Zug-Druckstange mit einem Spindelantrieb und gegebenenfalls mit weiteren Verteilerrohren oder Verbindungselementen verbunden ist;
c) jeweils einem am jeweiligen, dem jeweiligen Verteilerrohr abgewandten Ende eines jeweiligen Verbindungsrohres horizontal angeordneten Düsenrohr mit an seiner dem jeweiligen Verbindungsrohr abgewandten Seite angeordneten Düsen.

Ist an jedem Verteilerrohr nur ein abzweigend vertikal nach unten angeordnetes Verbindungsrohr vorgesehen, so kann die horizontal beweglich gelagerte Zug-Druckstange in vorteilhafter Weise seitlich an den einzelnen Verbindungsrohren in etwa halber Länge der Verbindungsrohre angeordnet und an einem Ende mit dem Spindelantrieb verbunden werden. Sind pro Verteilerrohr mehrere Verbindungsrohre vorgesehen so können jeweils zwei dieser Verbindungsrohre in vorteilhafter Weise mit einem horizontal angeordneten Verbindungselement miteinander verbunden werden. Die Zug-Druckstange kann dabei direkt an allen einzelnen Verbindungselementen angeordnet werden. Sind mehrere Verteilerrohre vorgesehen, so ist es darüber hinaus vorteilhaft, mehrere Zug-Druckstangen anzuordnen, wobei zwei Zug-Druckstangen gemeinsam an mindestens einem Verbindungsrohr oder gemeinsam an mindestens einem Verbindungselement beweglich gelagert angeordnet sind.

Es hat sich in überraschender Weise gezeigt, daß die Vorrichtung zum Abblasen von Staub von horizontal angeordneten Katalysatorflächen eine Anordnung des Spindelantriebs in etwa gleicher Höhe mit den Austauschvorrichtungen für das Austauschen der einzelnen Katalysatorblöcke in der Weise ermöglicht, daß die Bauhöhe des Reaktors im Vergleich zu den bekannten Abblasevorrichtungen gemäß JP-PS 54-25266 und DE-OS 30 44 820 verkleinert werden kann. Darüber hinaus hat sich in überraschender Weise gezeigt, daß die Vorrichtung zum Abblasen von Staub von horizontal angeordneten Katalysatorflächen über relativ lange Betriebszeiten eingesetzt werden kann, wobei eine zuverlässige Abreinigung der Katalysatorflächen gewährleistet ist.

Eine bevorzugte Ausgestaltung der Erfindung besteht darin, daß zwei bis vier an jedem Verteilerrohr abzweigend vertikal nach unten angeordnete Verbindungsrohre angeordnet sind, wobei jeweils zwei Verbindungsrohre mit einem horizontal angeordneten Verbindungselement miteinander verbunden sind und die einzelnen Verbindungselemente über mindestens eine beweglich gelagerte Zug-Druckstange teilweise miteinander und mit einem Spindelantrieb verbunden sind. Dadurch können mit der Vorrichtung zum Abblasen von Staub von horizontal angeordneten Katalysatorflächen auch relativ breite Katalysatorblöcke abgereinigt werden, wobei die Vorrichtung gleichzeitig eine relativ hohe Stabilität aufweist. Als Verbindungselemente können beispielsweise Rohrstücke oder Stücke von Rundmaterial verwendet werden, die zwischen zwei Verbindungsrohren horizontal angeordnet und mit den Verbindungsrohren verschweißt werden.

Eine weitere bevorzugte Ausgestaltung der Erfindung besteht darin, daß zwei bis 20 Verteilerrohre angeordnet sind. Dabei ist vorteilhaft, daß die Druckluft entweder auf mehrere Verteilerrohre aufgeteilt werden kann, was ein gleichzeitiges Abblasen des Staubes von mehreren Katalysatorblöcken ermöglicht, oder daß die Druckluft einzelnen Verteilerrohren nacheinander zugeführt werden kann, was ein Abblasen des Staubes von einzelnen Katalysatorblöcken in zeitlicher Reihenfolge ermöglicht.

Gemäß einer weiteren bevorzugten Ausgestaltung der Erfindung sind die Pendellager direkt an den Gehäusewänden des Reaktors angeordnet. Auf diese Weise werden aufwendige Halterungen für die Pendellager vermieden, so daß die Vorrichtung zum Abblasen von Staub von horizontal angeordneten Katalysatorflächen relativ kostengünstig hergestellt werden kann.

Nach einer weiteren bevorzugten Ausgestaltung der Erfindung sind als Zuleitungen für Druckluft Metallwellschläuche angeordnet. Durch diese Maßnahme läßt sich die Vorrichtung zum Abblasen von Staub von horizontal angeordneten Katalysatorflächen auch dann kontinuierlich betreiben, wenn die Temperaturen der staubhaltigen Gase relativ stark schwanken, da durch die Metallwellschläuche temperaturbedingte Ausdehnungen der Zuleitungen für Druckluft in besonders vorteilhafter Weise kompensiert werden.

Gemäß einer weiteren bevorzugten Ausgestaltung der Erfindung weisen die Düsen der Düsenrohre einen Durchmesser von 2 bis 8 mm auf. Weisen die Düsen der Düsenrohre einen Durchmesser von 2 bis 8 mm auf, so ist ein vollständiges Abblasen der horizontal angeordneten Katalysatorflächen mit einer relativ geringen Menge an Druckluft in relativ kurzer Zeit möglich.

Eine weitere bevorzugte Ausgestaltung der Erfindung besteht darin, daß die Zug-Druckstangen einen Durchmesser von 30 bis 80 mm aufweisen. Auf diese Weise kann die Vorrichtung zum Abblasen von Staub von horizontal angeordneten Katalysatorflächen auf besonders sichere Weise einer Pendelbewegung unterworfen werden.

Der Gegenstand der Erfindung wird anhand der Zeichnung (Fig. 1 bis 4) näher und beispielhaft erläutert.

Fig. 1 zeigt die Vorderansicht der Vorrichtung zum Abblasen von Staub von horizontal angeordneten Katalysatorflächen.

Fig. 2 zeigt eine perspektivische Darstellung der Vorrichtung zum Abblasen von Staub von horizontal angeordneten Katalysatorflächen.

Fig. 3 zeigt die Seitenansicht der Vorrichtung zum Abblasen von Staub von horizontal angeordneten Katalysatorflächen gemäß Schnitt A-A nach Fig. 1.

Fig. 4a zeigt die Vorrichtung zum Abblasen von Staub von horizontal angeordneten Katalysatorflächen gemäß Fig. 3 mit der Anordnung der Vorrichtungen zum Austauschen der Katalysatorblöcke.

Fig. 4b zeigt eine entsprechende Seitenansicht einer bekannten Vorrichtung zum Abblasen von Staub von horizontal angeordneten Katalysatorflächen.

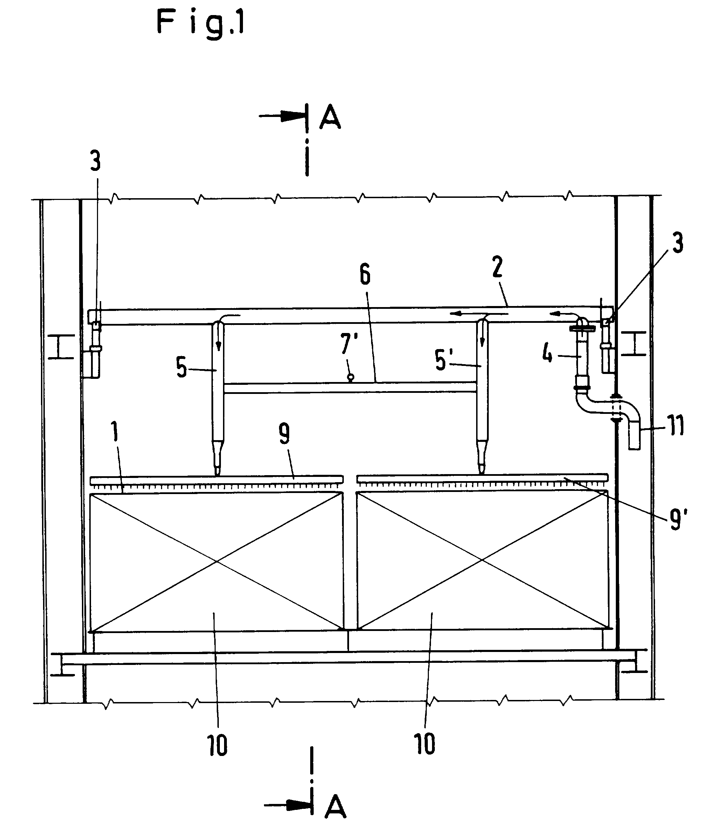

In Fig. 1 ist die Vorderansicht der Vorrichtung zum Abblasen von Staub von horizontal angeordneten Katalysatorflächen 1 mit einem Verteilerrohr 2, den Pendellagern 3, der Zuleitung 4 für die Druckluft, den Verbindungsrohren 5, 5' und den Düsenrohren 9, 9' vereinfacht dargestellt. Die Druckluft gelangt in Richtung der Pfeile über Luftzufuhr 11, Zuleitung 4, Verteilerrohr 2 und den zwei Verbindungsrohren 5, 5' zu den Düsenrohren 9, 9' und bläst den Staub von den horizontal angeordneten Katalysatorflächen 1 der jeweiligen Katalysatorblöcke 10. Die zwei Verbindungsrohre 5, 5' sind über ein horizontal angeordnetes Verbindungselement 6 miteinander verbunden, das seinerseits mit einer Zug-Druckstange 7 über ein bewegliches Lager in Verbindung steht.

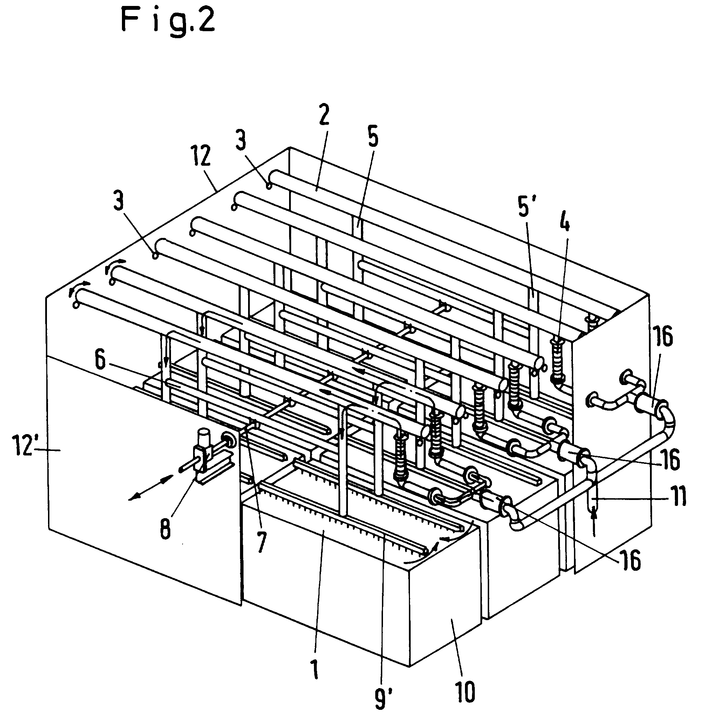

In Fig. 2 ist die Vorrichtung zum Abblasen von Staub von horizontal angeordneten Katalysatorflächen 1 in vereinfachter Form perspektivisch dargestellt. Die Pendellager 3 sind direkt an der Gehäusewand 12 angeordnet. Der Spindelantrieb 8 ist an der Gehäusewand 12' angeordnet, an der auch die Austauschvorrichtungen für den Austausch der einzelnen Katalysatorblöcke 10 in gleicher Höhe seitlich des Spindelantriebs 8 angeordnet werden können (nicht dargestellt). Die Menge der Druckluft wird hinter der Luftzufuhr 11 in Teilmengen aufgeteilt und über die Ventile 16 den jeweiligen Zuleitungen 4 in Richtung der Pfeile zugeführt. Durch wahlweises Öffnen bzw. Schließen der Ventile 16 können einzelne Reihen von Katalysatorblöcken 10 gezielt mit Druckluft beaufschlagt werden. Dabei wird die Zug-Druckstange 7 in Richtung des geraden Doppelpfeils durch den Spindelantrieb 8 bewegt. Die dadurch ausgelöste Pendelbewegung der Verteilerrohre 2 und der Düsenrohre 9' erfolgt gemäß der gekrümmten Doppelpfeile.

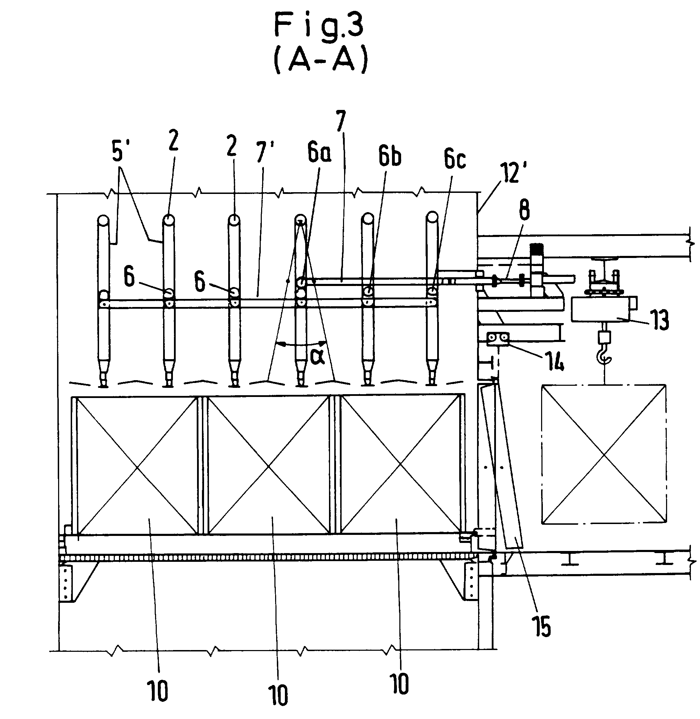

In Fig. 3 ist die Seitenansicht der Vorrichtung zum Abblasen von Staub von horizontal angeordneten Katalysatorflächen im Schnitt A-A gemäß Fig. 1 dargestellt. Die Verbindungsrohre 5' sind über zwei beweglich gelagerte Zug-Druckstangen 7, 7' miteinander verbunden, wobei die Zug-Druckstangen 7,7' gemeinsam an drei Verbindungselementen 6a, 6b, 6c beweglich gelagert angeordnet sind. An der Gehäusewand 12' sind die Vorrichtungen 13, 14 für den Austausch der Katalysatorblöcke 10 in etwa gleicher Höhe mit dem Spindelantrieb 8 angeordnet. Mit Hilfe der Vorrichtung 13 werden die einzelnen Katalysatorblöcke 10 dem Reaktor entnommen. Mit Hilfe der Vorrichtung 14 wird dazu ein Teil der Gehäusewand 15 ausgebaut, und die Katalysatorblöcke 10 zugänglich gemacht. Während des Betriebes der Vorrichtung zum Abblasen von Staub von horizontal angeordneten Katalysatorflächen beträgt der Winkel α 7° bis 16°. Die Vorrichtung zum Abblasen von Staub von horizontal angeordneten Katalysatorflächen ermöglicht eine vorteilhafte Anordnung der Vorrichtungen 13, 14 für den Austausch der Katalysatorblöcke 10, so daß die Zufuhr des im Reaktor zu behandelnden Rohgases oder ein weiterer Satz von Katalysatorblöcken 10 unmittelbar über den Verteilerrohren 2 angeordnet werden können, was im Vergleich zu den bekannten Vorrichtungen zum Abblasen von Staub von horizontal angeordneten Katalysatorflächen eine geringere Bauhöhe des Reaktors zur Folge hat.

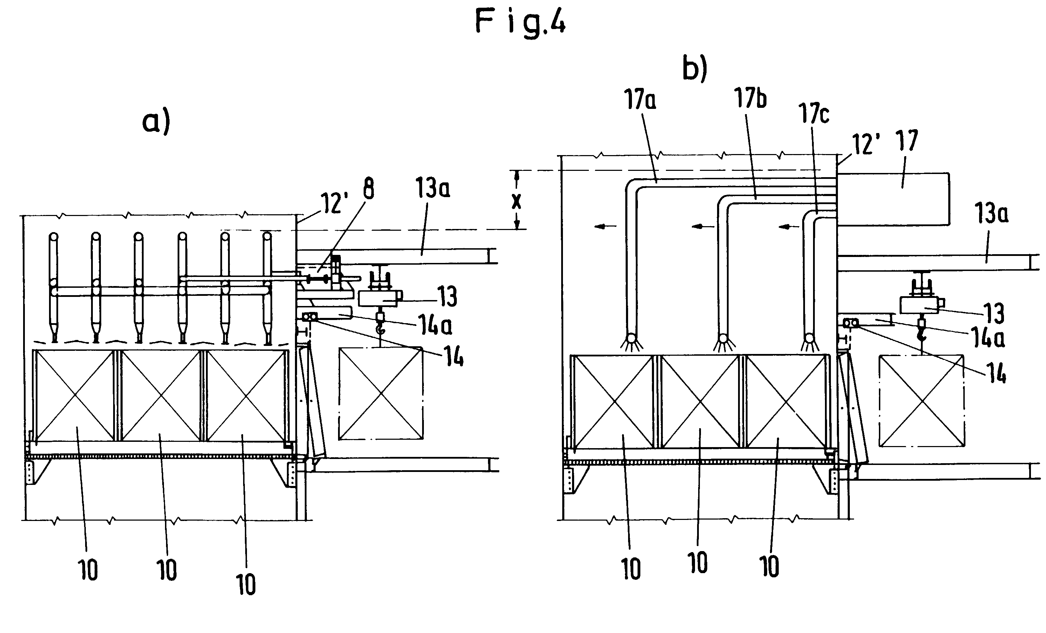

In Fig. 4 ist die erfindungsgemäße Vorrichtung zum Abblasen von Staub von horizontal angeordneten Katalysatorflächen (Fig. 4a) im Vergleich zu einer bekannten Vorrichtung zum Abblasen von Staub von horizontal angeordneten Katalysatorflächen (Fig. 4b) dargestellt. Fig. 4a entspricht inhaltlich dabei im wesentlichen der Fig. 3. Die Züge 13, 14 für den Austausch der Katalysatorblöcke 10 sind mittels Träger 13a, 14a zusammen mit dem Spindelantrieb 8 an einer gemeinsamen Gehäusewand 12' des Reaktors in etwa gleicher Höhe angeordnet. Die bekannte Vorrichtung zum Abblasen von Staub von horizontal angeordneten Katalysatorflächen gemäß Fig. 4b weist einen Antrieb 17 und Zuleitungsrohre 17a, 17b, 17c für die Druckluft auf, wobei jeweils ein Zuleitungsrohr 17a, 17b, 17c für die Abreinigung der Katalysatorfläche von jeweils einem Katalysatorblock 10 vorgesehen ist. Durch die Anordnung von jeweils einem Zuleitungsrohr 17a, 17b, 17c für jeweils einen Katalysatorblock 10 wird erreicht, daß der erforderliche Hub, der mit Hilfe des Antriebs 17 eingestellt wird, nicht größer gewählt werden muß als die Breite eines einzelnen Katalysatorblocks 10, was zur Folge hat, daß für den Antrieb 17 ebenfalls nur ein seitlicher Platzbedarf von etwa der Breite eines einzelnen Katalysatorblocks 10 besteht. Auch bei der bekannten Vorrichtung zum Abblasen von Staub von horizontal angeordneten Katalysatorflächen sind die Züge 13, 14 für den Austausch der einzelnen Katalysatorblöcke 10 mit ihren jeweiligen Trägern 13a, 14a zusammen mit dem Antrieb 17 aus Platzgründen an einer gemeinsamen Gehäusewand 12' angeordnet. Der Antrieb 17 hat dabei eine Höhe von 700 bis 1000 mm. Die erfindungsgemäße Vorrichtung zum Abblasen von Staub von horizontal angeordneten Katalysatorflächen gemäß Fig. 4a hat jedoch gegenüber der bekannten Vorrichtung zum Abblasen von Staub von horizontal angeordneten Katalysatorflächen gemäß Fig. 4b den Vorteil, daß im Vergleich die Bauhöhe X des Reaktors eingespart werden kann. Bei der bekannten Vorrichtung zum Abblasen von Staub von horizontal angeordneten Katalysatorflächen ist es erforderlich, den Antrieb 17 oberhalb der Züge 13, 14 für den Austausch von Katalysatorblöcken 10 und oberhalb der zugehörigen Träger 13a, 14a anzuordnen, so daß sich die Bauhöhe des Reaktors im Vergleich zur erfindungsgemäßen Vorrichtung zum Abblasen von Staub von horizontal angeordneten Katalysatorflächen um den Betrag X erhöht. Die erfindungsgemäße Vorrichtung zum Abblasen von Staub von horizontal angeordneten Katalysatorflächen ermöglicht somit eine gründliche Abreinigung der horizontal angeordneten Katalysatorflächen, wobei gleichzeitig die Bauhöhe des Reaktors relativ niedrig gehalten werden kann und eine Anordnung der erforderlichen Züge für den Austausch der einzelnen Katalysatorblöcke 10 zusammen mit dem Spindelantrieb 8 an einer gemeinsamen Gehäusewand 12' möglich ist.

## Patentansprüche

1. Vorrichtung zum Abblasen von Staub von horizontal angeordneten Katalysatorflächen (1), bestehend aus
a) mindestens einem oberhalb der horizontal angeordneten Katalysatorflächen (1) horizontal mittels Pendellager (3) angeordneten Verteilerrohr (2), das direkt mit jeweils einer Zuleitung (4) für Druckluft verbunden ist;
b) mindestens einem an jedem Verteilerrohr (2) abzweigend vertikal nach unten angeordneten Verbindungsrohr (5, 5'), das eine Länge von 800 bis 2000 mm aufweist und das über mindestens eine horizontal beweglich gelagerte Zug-Druckstange (7, 7') mit einem Spindelantrieb (8) und gegebenenfalls mit weiteren Verteilerrohren (5, 5') über Verbindungselementen (6, 6a, 6b, 6c) verbunden ist;
c) jeweils einem, dem jeweiligen Verteilerrohr (2) abgewandten Ende eines jeweiligen Verbindungsrohres (5, 5') horizontal angeordneten Düsenrohr (9,9') mit an seiner dem jeweiligen Verbindungsrohr (5, 5') abgewandten Seite angeordneten Düsen.

2. Vorrichtung nach Anspruch 1, bei der zwei bis vier an jedem Verteilerrohr (2) abzweigend vertikal nach unten angeordnete Verbindungsrohre (5, 5') angeordnet sind, wobei jeweils zwei Verbindungsrohre (5, 5') mit einem horizontal angeordneten Verbindungselement (6, 6a, 6b, 6c) miteinander verbunden sind, und die einzelnen Verbindungselemente (6, 6a, 6b, 6c) über mindestens eine beweglich gelagerte Zug-Druckstange (7, 7') miteinander und mit einem Spindelantrieb (8) verbunden sind.

3. Vorrichtung nach Anspruch 1 oder 2, bei der zwei bis 20 Verteilerrohre (2) angeordnet sind.

4. Vorrichtung nach einem der Ansprüche 1 bis 3 bei der die Pendellager (3) direkt an den Gehäusewänden (12) des Reaktors angeordnet sind.

5. Vorrichtung nach einem der Ansprüche 1 bis 4, bei der als Zuleitungen (4) für Druckluft Metallwellschläuche angeordnet sind.

6. Vorrichtung nach einem der Ansprüche 1 bis 5, bei der die Düsen der Düsenrohre (9) einen Durchmesser von 2 bis 8 mm aufweisen.

7. Vorrichtung nach einem der Ansprüche 1 bis 6, bei der die Zug-Druckstangen (7, 7') einen Durchmesser von 30 bis 80 mm aufweisen.

## Claims

1. An apparatus for blowing off dust from horizontally arranged catalyst surfaces (1), comprising
(a) at least one distributing pipe (2) arranged horizontally above the horizontally arranged catalyst surfaces (1) by means of self-aligning bearings (3), which distributing pipe is directly connected with a supply line (4) for compressed air;
(b) at least one connecting pipe (5, 5') mounted on each distributing pipe (2) so as to branch vertically in downward direction, which has a length of 800 to 2000 mm, and by means of a horizontally movably supported compression-tension rod (7, 7') is connected with a spindle drive (8) and possibly with further distributing pipes (5, 5') via connecting elements (6, 6a, 6b, 6c);
(c) a nozzle pipe (9, 9') arranged horizontally at the end of a respective connecting pipe (5, 5') facing away from the respective distributing pipe (2), which nozzle pipe comprises nozzles provided on its side facing away from the respective connecting pipe (5, 5').

2. The apparatus as claimed in claim 1, wherein two to four connecting pipes (5, 5') are mounted on each distributing pipe (2) so as to branch vertically in downward direction, where two connecting pipes (5, 5') are connected with each other via a horizontally arranged connecting element (6, 6a, 6b, 6c), and the individual connecting elements (6, 6a, 6b, 6c) are connected with each other and with a spindle drive (8) via at least one movably supported compression-tension rod (7, 7').

3. The apparatus as claimed in claim 1 or claim 2, wherein two to 20 distributing pipes (2) are provided.

4. The apparatus as claimed in one of claims 1 to 3, wherein the self-aligning bearings (3) are mounted directly at the housing walls (12) of the reactor.

5. The apparatus as claimed in one of claims 1 to 4, wherein corrugated metal tubes are provided as supply lines (4) for compressed air.

6. The apparatus as claimed in one of claims 1 to 5, wherein the nozzles of the nozzle pipes (9) have a diameter of 2 to 8 mm.

7. The apparatus as claimed in one of claims 1 to 6, wherein the compression-tension rods (7, 7') have a diameter of 30 to 80 mm.

## Revendications

1. Dispositif pour faire disparaître de la poussière de surfaces (1) de catalyseur disposées horizontalement, par soufflage, constitué de
a) au moins un tuyau distributeur (2), qui est disposé horizontalement au-dessus des surfaces (1) de catalyseur disposées horizontalement au moyen de paliers oscillants (3) et qui communique directement avec un conduit (4) d'alimentation en air comprimé;
b) au moins un tuyau (5,5') de liaison, qui est disposé sur chaque tuyau (2) distributeur en bifurquant verticalement vers le bas, qui a une longueur comprise entre 800 et 2000 mm et qui est relié par l'intermédiare d'au moins une barre (7,7') de traction-poussée montée de manière à pouvoir se mouvoir horizontalement, à un dispositif (8) d'entraînement de barre et éventuellement à d'autres tuyaux (5.5') distributeurs par l'intermédiaire d'éléments (6,6a,6b,6c) de liaison;
c) un tuyau (9,9') à buses disposé horizontalement à l'extrémité, éloignée du tube (2) distributeur respectif, de chaque tuyau (5,5') de liaison, et comportant des buses disposées du côté éloigné du tuyau (5,5') de liaison.

2. Dispositif suivant la revendication 1, dans lequel deux à quatre tuyaux (5,5') de liaison disposés sur chaque tuyau (2) distributeur en bifurcation verticale vers le bas sont prévus, deux tuyaux (5,5') de liaison étant reliés l'un à l'autre par un élément (6,6a,6b,6c) de liaison disposé horizontalement et les divers éléments (6,6a,6b,6c) de liaison étant reliés l'un à l'autre par au moins une barre (7,7') de traction-poussée logée de manière à pouvoir se mouvoir et étant reliés à un dispositif (8) d'entraînement de barre.

3. Dispositif suivant la revendication 1 ou 2, dans lequel deux à 20 tuyaux (2) distributeurs sont prévus.

4. Dispositif suivant l'une des revendications 1 à 3, dans lequel les paliers (3) oscillants sont disposés directement sur les parois (12) du bâti du réacteur.

5. Dispositif suivant l'une des revendications 1 à 4, dans lequel des tuyaux onduleux flexibles métalliques sont prévus en tant que conduit (4) d'alimentation en air comprimé.

6. Dispositif suivant l'une des revendications 1 à 5, dans lequel les buses des tuyaux (9) à buses ont un diamètre compris entre 2 et 8 mm.

7. Dispositif suivant l'une des revendications 1 à 6, dans lequel les barres (7,7') de traction-poussée ont un diamètre compris entre 30 et 80 mm.
